# EUROPÄISCHE PATENTSCHRIFT

(11) **EP 3 788 701 B1**
(45) Veröffentlichungstag und Bekanntmachung des Hinweises auf die Patenterteilung: **27.08.2025**
(21) Anmeldenummer: 19746003.3
(22) Anmeldetag: 10.07.2019
(51) Int. Cl.: B33Y 10/00, B33Y 80/00

(54) **ROBUSTE MATERIALLAGEN**
ROBUST LAYERS OF MATERIAL
COUCHES DE MATÉRIAU ROBUSTES

(30) Priorität: 13.07.2018 EP 18183449
(43) Veröffentlichungstag der Anmeldung: 10.03.2021
(73) Patentinhaber: Siemens Aktiengesellschaft, 80333 München (DE)
(72) Erfinder: VOLLMER, Rolf, 36129 Gersfeld (DE)
(74) Vertreter: Siemens Patent Attorneys
(86) Internationale Anmeldenummer: PCT/EP2019/068477
(87) Internationale Veröffentlichungsnummer: WO 2020/011820

(56) Entgegenhaltungen:
- EP-A1- 2 793 362
- EP-A1- 3 255 758
- EP-A2- 1 300 207
- EP-A2- 1 300 210

## Beschreibung

Die Erfindung betrifft eine Materiallage für eine dynamoelektrische rotatorische Maschine, wobei die Materiallage magnetflussleitende Bereiche, aufweisend ein erstes Material mit einer ersten magnetischen Permeabilität µr > 50, und wenigstens einen flusssperrenden Bereich, aufweisend ein zweites Material mit einer gegenüber der ersten magnetischen Permeabilität geringeren zweiten magnetischen Permeabilität µr < 5, umfasst.

EP 3 255 758 A1 betrifft einen Läufer für eine Reluktanzmaschine, mit in axialer Richtung abwechselnd angeordneten Leiterschichten und Isolationsschichten, wobei die Leiterschichten magnetflussleitende Leiterbereiche aufweisen und die Isolationsschichten elektrisch isolierend sind. Um das Gewicht und die Effizienz einer Reluktanzmaschine zu verbessern, ist erfindungsgemäß vorgesehen, dass der Läufer wenigstens teilweise durch additive Fertigung hergestellt ist.

EP 2 793 362 A1 betrifft einen Rotor für einen Reluktanzmotor, wobei der Rotor ein Blechpaket aus mehreren elektrisch voneinander isolierten Schichten aufweist, von denen jede zumindest ein magnetisch leitfähiges Rotorblech aufweist und in der durch das zumindest eine Rotorblech insgesamt mehrere Flussleitabschnitte gebildet sind, die voneinander durch einen unmagnetischen Bereich getrennt sind. Der Erfindung liegt die Aufgabe zugrunde, ein hohes Drehmoment und eine hohe Drehzahl zu ermöglichen. Zwischen zumindest zwei der Schichten ist hierzu eine Einlegscheibe angeordnet, welche jeweils mit zumindest zwei Flussleitabschnitten einer der Schichten oder beider Schichten, zwischen denen sie angeordnet ist, verbunden ist und hierdurch diese Flussleitabschnitte über den zwischen ihnen befindlichen unmagnetischen Bereich hinweg miteinander verbindet.

EP 1 300 207 A2 offenbart ein Herstellungsverfahren für eine Synchron-Reluktanzmaschine und Verbundrotoranordnung aus Metallpulver für eine solche Maschine.

EP 1 300 210 A2 offenbart ein Herstellungsverfahren und Verbundrotoranordnung aus Metallpulver für Maschine mit an der Oberfläche angeordneten Permanentmagneten.

Zum magnetischen Kreis einer Maschine, die sowohl als Motor als auch als Generator betrieben werden kann, gehören ein Stator und ein Rotor. Der Rotor und der Stator stellen die leistungserzeugenden Komponenten, auch Aktivteile genannt, der Maschine dar und werden bisher als Blechpakete gefertigt.

Die Blechpakete umfassen Bleche, welche aus gewalzten Großblechen aus weichmagnetischem Material herausgeschnitten bzw. gestanzt werden. Die Bleche werden anschließend zum Blechpaket paketiert.

Eine Reluktanzmaschine weist einen Rotor mit einem Flusssperrenschnitt auf, der einer Ausprägung eines magnetischen Polpaars bzw. mehrerer magnetischer Polpaare dient. Die Flusssperren werden gemäß dem Stand der Technik ebenso aus dem Großblech herausgeschnitten bzw. gestanzt und sind somit mit Luft gefüllt (bzw. mit einem anderen Fluid, welches in der Reluktanzmaschine vorhanden ist, insbesondere ein Gas).

Bei einer konventionellen Fertigung von Blechen für Reluktanzmaschinen fällt beim Herausschneiden bzw. Stanzen der Bleche aus den Großblechen sowie beim Herausschneiden bzw. Stanzen der Flusssperren Abfall an.

Ferner sind Rotoren mit Blechen, die einen Flusssperrenschnitt aufweisen, sehr filigran, anfällig für Schwingungen und erzeugen Geräusche. Insbesondere durch die filigrane Struktur können keine hohen Drehzahlen erreicht werden.

Die EP 2775591 A1 zeigt ferner einen Rotor einer rotatorischen dynamoelektrischen Reluktanzmaschine (inverse Reluktanzmaschine), wobei der Rotor in Rotationsrichtung betrachtet Bereiche unterschiedlicher magnetischer Widerstände aufweist.

Magnetische Bereiche werden hierbei an amagnetischen Bereichen durch eine Bandage und/oder eine Klebeverbindung und/oder eine Lötverbindung und/oder andere Verbindungselemente gehalten. Dies ist jedoch einerseits sehr umständlich. Andererseits ist die Verbindung der magnetischen Bereiche und der amagnetischen Bereiche nicht stabil und widerstandsfähig.

Der Erfindung liegt daher die Aufgabe zugrunde, die Herstellung von Maschinen, insbesondere Reluktanzmaschinen, insbesondere von inversen Reluktanzmaschinen, zu vereinfachen sowie die Widerstandsfähigkeit zu verbessern.

Die Lösung der Aufgabe gelingt durch Anspruch 1, d. h. durch ein Verfahren zur Herstellung einer Materiallage für eine dynamoelektrische rotatorische Reluktanzmaschine, wobei die Materiallage wenigstens einen ersten Materialbereich, aufweisend ein erstes Material, und wenigstens einen zweiten Materialbereich, aufweisend ein zweites Material, umfasst, wobei die Materialbereiche stoffschlüssig verbunden sind, wobei die Materiallage magnetflussleitende Bereiche, aufweisend das erste Material mit einer ersten magnetischen Permeabilität µr > 50, und wenigstens einen flusssperrenden Bereich, aufweisend das zweite Material mit einer gegenüber der ersten magnetischen Permeabilität geringeren zweiten magnetischen Permeabilität µr < 5, umfasst, wobei das erste Material und das zweite Material stoffschlüssig verbunden sind, wobei die Materiallage mittels eines additiven Verfahrens hergestellt wird, mit folgenden Schritten:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Materialbereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Materialbereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung. Ferner gelingt die Lösung der Aufgabe gemäß Anspruch 5 durch eine Materiallage.

Es wird zudem ein Verfahren zur Herstellung eines Materiallagengefüges und ein Materiallagengefüge beschrieben.

Vorteilhaft weist ein Rotor für eine dynamoelektrische rotatorische Maschine, insbesondere Reluktanzmaschine, ein derartiges Materiallagengefüge auf.

Eine dynamoelektrische rotatorische Maschine, insbesondere Reluktanzmaschine, weist vorteilhaft einen derartigen Rotor auf.

Die Materiallage ist besonders gut für einen Rotor einer dynamoelektrischen rotatorischen Maschine, insbesondere Reluktanzmaschine, geeignet.

Die Materiallage weist vorzugsweise eine Rotationsrichtung um eine in einem Lagenmittelpunkt der Materiallage angeordnete Rotationsachse auf.

Die Materiallage hat vorteilhaft die bisherigen Funktionen eines Blechs in einem Rotor-Blechpaket einer herkömmlichen dynamoelektrischen rotatorischen Maschine inne und nimmt die Aufgaben eines Blechs wahr.

Vorteilhaft entspricht ein Umriss der Materiallage im Wesentlichen dem Umriss eines Blechs einer herkömmlichen dynamoelektrischen rotatorischen Maschine.

Die Materiallage ist vorteilhaft dünner hergestellt und/oder dünner herstellbar als ein Blech.

Das Materiallagengefüge hat vorteilhaft die bisherigen Funktionen eines Rotor-Blechpakets einer herkömmlichen dynamoelektrischen rotatorischen Maschine inne und nimmt die Aufgaben eines Rotor-Blechpakets einer herkömmlichen dynamoelektrischen rotatorischen Maschine wahr.

Die Materiallagen sind zur Schaffung des Materiallagengefüges übereinander angeordnet. Vorzugsweise sind die Materiallagen in Richtung einer Rotationsache, in anderen Worten: entlang einer Rotationsachse, des Materiallagengefüges angeordnet.

Auch andere Anordnungen, bei welchen wenigstens zwei Materiallagen benachbart sind, sind denkbar.

Die Materiallage weist vorzugsweise eine im Wesentlichen runde, im Wesentlichen mittig angeordnete Materialaussparung auf. Das Materiallagengefüge weist vorzugsweise eine zylindrische Materialaussparung entlang der Rotationsachse zur Anbindung an eine Welle auf.

Die Materiallage ist vorzugsweise einstückig.

Die Erfindung bietet den Vorteil, dass die Maschine, insbesondere Reluktanzmaschine, insbesondere der Rotor, stabil und widerstandsfähig ist. Zudem wird aufgrund einer erhöhten Festigkeit eine Erhöhung einer Maximaldrehzahl erreicht.

Die Erfindung bietet ferner den Vorteil, dass die Materiallagen eine höhere Festigkeit haben als konventionelle Bleche mit Flusssperrenschnitt. Eine magnetische Streuung ist geringer, eine Schwingneigung ist geringer und somit ist auch eine Geräuschentwicklung geringer.

In einer vorteilhaften Ausführungsform der Erfindung weist die Materiallage auf wenigstens einer Lagenseite ein Isolationsmaterial auf.

Das Isolationsmaterial dient vorzugsweise einer elektrischen Isolation.

Das Isolationsmaterial dient insbesondere einer elektrischen Isolation einer Materiallage gegenüber wenigstens einer weiteren Materiallage, wenn wenigstens zwei oder mehr Materiallagen, insbesondere als Materiallagengefüge, übereinander angeordnet sind.

In einer weiteren vorteilhaften Ausführungsform der Erfindung weist die Materiallage auf beiden Lagenseiten ein Isolationsmaterial auf.

Die Materiallage ist dünner, wenn sie nur auf einer Lagenseite Isolationsmaterial aufweist. Diese Ausführung ist günstiger.

Die Materiallage ist jedoch besser isoliert, wenn sie auf beiden Lagenseiten Isolationsmaterial aufweist.

In einer weiteren vorteilhaften Ausführungsform der Erfindung weist die Materiallage Lack, insbesondere Backlack, auf.

Der Lack, insbesondere Backlack, kann das Isolationsmaterial sein. Jedoch können Lack und Isolationsmaterial auch zwei unterschiedliche Materialien sein.

Der Lack, Backlack, ist vorzugsweise aufgebracht und ermöglicht eine besonders gute elektrische Isolation der Materiallage, insbesondere gegenüber einer benachbarten weiteren Materiallage in einem Materiallagengefüge.

In einer weiteren vorteilhaften Ausführungsform der Erfindung ist die Materiallage mit wenigstens einer weiteren Materiallage verfestigbar (in anderen Worten: fest verbindbar).

Die Materiallage ist, insbesondere mittels des Backlacks, mit der weiteren, insbesondere benachbarten, Materiallage verfestigbar.

Zwei oder mehr Materiallagen sind auf diese Weise verfestigbar.

Der vorteilhaft aufgebrachte Backlack ermöglicht eine hohe Festigkeit des, insbesondere durch Verfestigung entstehenden, Materiallagengefüges, da die Materiallagen flächig verbunden sind. Dies reduziert auch Vibrationen und Geräusche.

In einer weiteren vorteilhaften Ausführungsform der Erfindung weist die Materiallage wenigstens einen dritten Bereich auf, wobei der dritte Bereich permanentmagnetisches Material aufweist, wobei das permanentmagnetische Material stoffschlüssig mit dem ersten Material und/oder mit dem zweiten Material verbunden ist.

Als permanentmagnetisches Material werden vorzugsweise Seltenerdmagnete, beispielsweise Neodym-Eisen-Bor und/oder Samarium-Cobalt, eingesetzt. Als permanentmagnetisches Material können jedoch auch Stahl, Aluminium-Nickel-Cobalt, Bismanol und/oder Ferrite eingesetzt werden. Zudem ist auch der Einsatz von Kunststoffmagnetmaterial als permanentmagnetisches Material möglich.

In einer vorteilhaften Ausführung der Erfindung weist das permanentmagnetische Material eine radiale Magnetisierung auf.

In einer weiteren vorteilhaften Ausführungsform der Erfindung dienen die magnetflussleitenden Bereiche einer Ausbildung von Polen mit einer Polzahl 2p, wobei die magnetflussleitenden Bereiche derart angeordnet sind, dass sie an einer dem Lagenmittelpunkt zugewandten Unterseite an den flusssperrenden Bereich angrenzen, wobei sich eine Polteilung in Rotationsrichtung von der Mitte des flusssperrenden Bereichs zur Mitte des nächsten flusssperrenden Bereichs erstreckt.

In einer weiteren vorteilhaften Ausführungsform der Erfindung entspricht eine Breite der flusssperrenden Bereiche in Rotationsrichtung betrachtet an einem Außenumfang der Materiallage zwischen 1% und 50% der Polteilung, wobei eine radiale Tiefe eines Pols > 10% einer Kreisbogenlänge der Polteilung entspricht.

In einer weiteren vorteilhaften Ausführungsform der Erfindung dienen die magnetflussleitenden Bereiche einer Ausbildung von Polen mit einer Polzahl 2p, wobei ein magnetflussleitender Bereich von flusssperrenden Bereichen im Wesentlichen bogenförmig durchzogen ist, wobei sich eine Polteilung in Rotationsrichtung von der Mitte des magnetflussleitenden Bereichs zur Mitte des nächsten magnetflussleitenden Bereichs erstreckt.

In einer weiteren vorteilhaften Ausführungsform der Erfindung entspricht eine Breite der magnetflussleitenden Bereiche in Rotationsrichtung betrachtet an einem Außenumfang der Materiallage zwischen 1% und 50% der Polteilung.

Diese Ausführungsform eignet sich besonders gut als Materiallage für ein Materiallagengefüge eines Rotors, der Teil einer inversen Reluktanzmaschine ist.

Beim Verfahren zur Herstellung einer Materiallage, wobei die Materiallage wenigstens einen ersten Materialbereich, aufweisend ein erstes Material, und wenigstens einen zweiten Materialbereich, aufweisend ein zweites Material, umfasst, wobei die Materialbereiche stoffschlüssig verbunden sind, wird die Materiallage mittels eines additiven Verfahrens hergestellt.

Es sind verschiedene additive Verfahren möglich, beispielsweise ein MPA-Verfahren und/oder ein Cold-Spray-Verfahren.

Beim MPA-Verfahren wird ein Hauptgas, vorzugsweise Wasserdampf, in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe magnetische Energie des Pulverpartikels wird beim Aufprall in Wärme umgewandelt, wodurch der Partikel anhaftet. Da die Pulverpartikel nicht aufgeschmolzen werden, findet nur ein geringer Energieeintrag in das Bauteil statt. Beim MPA-Verfahren können mehrere Düsen gleichzeitig verschiedene Pulverpartikel auftragen. Somit kann auch ein Bauteil geschaffen werden, das wenigstens zwei unterschiedliche Materialien aufweist.

Beim Cold-Spray-Verfahren werden Pulverpartikel, insbesondere mit einem Durchmesser von 1 bis 50 µm, in einem Überschallgasstrahl auf Geschwindigkeiten von vorzugsweise bis zu 500-1000 m/s beschleunigt. Beim Aufprall auf eine Oberfläche werden die Partikel plastisch verformt und haften an der Oberfläche.

Es sind auch andere additive Verfahren denkbar.

In einer bevorzugten Ausführungsform der Erfindung wird jedoch ein Schablonendruck-Verfahren eingesetzt. Es wird insbesondere ein Schablonendruck-Verfahren, das im Folgenden beschrieben wird, eingesetzt.

Erfindungsgemäß weist ein Verfahren zur Herstellung einer Materiallage, wobei die Materiallage wenigstens einen ersten Materialbereich, aufweisend ein erstes Material, und wenigstens einen zweiten Materialbereich, aufweisend ein zweites Material, umfasst, folgende Schritte auf:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Materialbereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Materialbereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung.

Vorzugsweise wird das Bindemittel aus dem ersten Grünkörper und/oder dem zweiten Grünkörper, insbesondere mittels Entbinderung, vor dem Zusammenfügen und/oder nach dem Zusammenfügen ausgetrieben.

Die erste bzw. zweite Schablone ist vorzugsweise eine Vorlage zum Übertragen gewünschter Formen und/oder Umrisse und/oder Muster und/oder Aussparungen etc. Die erste bzw. zweite Schablone kann beliebig oft verwendet werden.

Mittels der ersten bzw. zweiten Schablone kann genau die Form der Materiallage gebildet werden, die gewünscht ist. So entsteht kein Abfall. Es können auch drei oder mehr Schablonen für eine Materiallage verwendet werden.

Die Materiallage ist vorzugsweise durch die Erwärmung und/oder Verdichtung, insbesondere mittels Sinterung, der beiden Grünkörper einstückig.

In einer weiteren vorteilhaften Ausführungsform der Erfindung umfassen die Festteilchen Metallteilchen.

In einer weiteren vorteilhaften Ausführungsform der Erfindung umfassen die Festteilchen der ersten Suspension magnetische Teilchen und die Festteilchen der zweiten Suspension umfassen amagnetische Teilchen.

Die magnetischen Teilchen weisen vorzugsweise die erste magnetische Permeabilität von µr > 50 auf. Die amagnetischen Teilchen weisen vorzugsweise die zweite magnetische Permeabilität von µr < 5 auf.

Vorzugsweise gilt für die erste magnetische Permeabilität µr > 500. Materialien mit der ersten magnetischen Permeabilität können beispielsweise Baustahl, Elektroblech oder eine Eisen-Cobalt-Legierung sein. Besonders gut eignen sich Materialien mit einer magnetischen Leitfähigkeit von µr > 2000, insbesondere 3000 < µr < 4000. Auch andere Materialien sind denkbar.

Materialien mit der zweiten magnetischen Permeabilität können beispielsweise rostfreier Stahl, Aluminium, Kupfer, Gummi oder Kunststoff sein.

Vorteilhaft sind die Materialien mit der zweiten magnetischen Permeabilität auch elektrisch nicht leitend wie beispielsweise Kunststoff.

In einer weiteren vorteilhaften Ausführungsform der Erfindung umfasst das Material mit der zweiten magnetischen Permeabilität Keramik.

Vorzugsweise ist die Keramik eine amagnetische Oxidkeramik, beispielsweise Zirconiumoxid oder Aluminiumoxid.

Das Material mit der zweiten magnetischen Permeabilität kann ausschließlich Keramik umfassen oder eine Mischung aus Keramik und einem anderen Stoff (z. B. rostfreier Stahl, Aluminium, Kupfer, Gummi und/oder Kunststoff) umfassen.

In einer weiteren vorteilhaften Ausführungsform der Erfindung wird auf die Materiallage auf wenigstens einer Lagenseite ein Isolationsmaterial aufgebracht.

Vorzugsweise wird auf die Materiallage auf beiden Lagenseiten ein Isolationsmaterial aufgebracht.

Als Isolationsmaterial sind verschiedene Lacke und/oder Beschichtungen geeignet.

Das aufgebrachte Isolationsmaterial dient vorzugsweise einer elektrischen Isolation.

Das aufgebrachte Isolationsmaterial dient vorzugsweise einer elektrischen Isolation einer Materiallage gegenüber wenigstens einer weiteren Materiallage, wenn wenigstens zwei oder mehr Materiallagen, insbesondere zur Schaffung eines Materiallagengefüges, übereinander angeordnet werden.

Wird auf die Materiallage auf nur einer Lagenseite das Isolationsmaterial aufgebracht, ist die Materiallage dünner. Wird auf die Materiallage auf beiden Lagenseiten das Isolationsmaterial aufgebracht, ist die Materiallage besser isoliert.

In einer weiteren vorteilhaften Ausführungsform der Erfindung wird auf die Materiallage ein Lack, insbesondere Backlack, aufgebracht.

Der Lack, insbesondere Backlack, kann das Isolationsmaterial sein. Jedoch können Lack und Isolationsmaterial auch zwei unterschiedliche Materialien sein.

Der vorteilhaft aufgebrachte Backlack ermöglicht eine besonders gute elektrische Isolation der Materiallage, insbesondere gegenüber einer benachbarten weiteren Materiallage in einem Materiallagengefüge.

Ferner ist die Materiallage, insbesondere mittels des Backlacks, mit der benachbarten Materiallage bzw. den benachbarten Materiallagen verfestigbar.

Der vorteilhaft aufgebrachte Backlack ermöglicht eine hohe Festigkeit des Materiallagengefüges, da die Materiallagen flächig verbunden sind. Dies reduziert auch Vibrationen und Geräusche.

In einer weiteren vorteilhaften Ausführungsform der Erfindung ist die Suspension strukturviskos.

Dies hat den Vorteil, dass die Suspension während des Auftragens auf die Grundfläche zur Erzeugung des Grünkörpers, vorzugsweise mit der Rakel, weniger viskos ist und die gewünschte Form durch die Schablone optimal übertragen werden kann. Ist das Auftragen beendet, behält der Grünkörper die gewünschte Form bei.

Das Verfahren zur Herstellung eines Materiallagengefüges für einen Rotor einer dynamoelektrischen rotatorischen Maschine, insbesondere Reluktanzmaschine, hat folgende Schritte:
- Zusammenfügen einer Mehrzahl an Materiallagen,
- Verbacken der Materiallagen zur gegenseitigen Verfestigung.

Das Materiallagengefüge für einen Rotor einer dynamoelektrischen rotatorischen Maschine weist vorteilhaft eine Mehrzahl an übereinander angeordneten Materiallagen auf.

Vorzugsweise ist die Mehrzahl an Materiallagen in Richtung der Rotationsachse angeordnet.

Vorzugsweise weist das Materiallagengefüge eine zylindrische Materialaussparung entlang der Rotationsachse zur Anbindung an eine Welle auf.

In einer weiteren vorteilhaften Ausführung der Erfindung ist der Rotor als Rotormodul ausgeführt. Wenigstens zwei zusammengefügte Rotormodule ergeben den Rotor.

Besonders gut eingesetzt werden kann eine rotatorische dynamoelektrische Maschine, insbesondere Reluktanzmaschine, mit einem derartigen Rotor in der Verfahrenstechnik mit Pumpen, Lüftern, Kompressoren, Mischern und Zentrifugen, in der Fördertechnik sowie auch im Maschinenbau. Generell ist die Maschine mit einem derartigen Rotor universell einsetzbar.

Derartige Reluktanzmaschinen können besonders gut als Synchronreluktanzmotoren eingesetzt werden. Sie eignen sich aufgrund ihres einfachen und robusten Aufbaus besonders gut für Antriebe von straßengebundenen und schienengebundenen Fahrzeugen, **z. B.** Elektroautos und Straßenbahnen.

Auch für Antriebe von Flugzeugen und Helikoptern können sie sehr gut eingesetzt werden.

Im Folgenden wird die Erfindung anhand der in den Figuren dargestellten Ausführungsbeispiele näher beschrieben und erläutert. Es zeigen:
- FIG 1: den Stand der Technik,
- FIG 2: eine Materiallage für eine Maschine, insbesondere Reluktanzmaschine,
- FIG 3: eine Materiallage für eine inverse Maschine, insbesondere Reluktanzmaschine,
- FIG 4: einen Rotor, aufweisend ein Materiallagengefüge mit beidseitig isolierten Materiallagen,
- FIG 5: einen Rotor, aufweisend ein Materiallagengefüge mit einseitig isolierten Materiallagen,
- FIG 6: eine weitere Materiallage, aufweisend permanentmagnetisches Material für eine inverse Reluktanzmaschine,
- FIG 7: ein Verfahren zur Herstellung einer Materiallage und
- FIG 8: ein Verfahren zur Herstellung eines Materiallagengefüges.

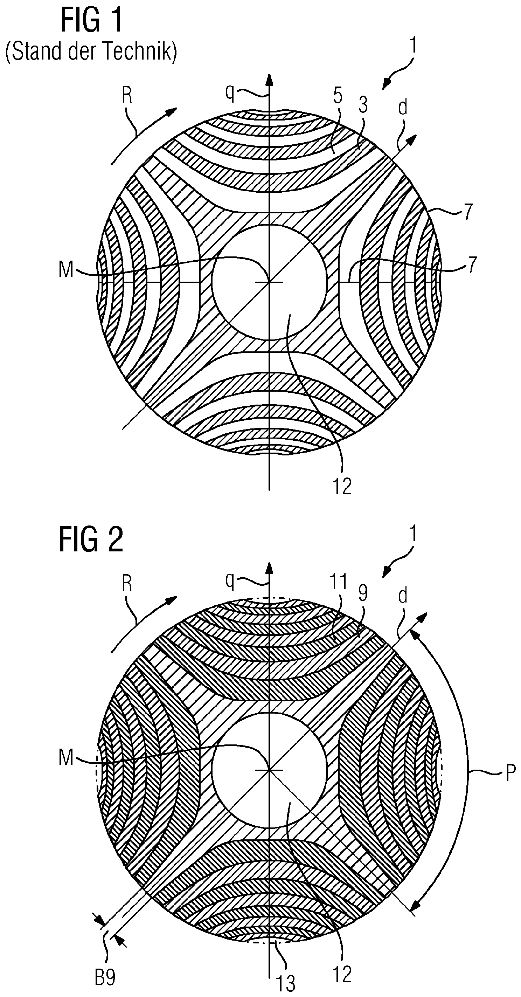

FIG 1 zeigt den Stand der Technik, also ein Blech für ein Blechpaket aus weichmagnetischem Material 3, das zudem Flusssperren 5 aufweist. Die Flusssperren 5 wurden aus dem Blech herausgestanzt und sind mit Luft bzw. einem anderen Gas gefüllt. Die Figur zeigt zudem Stege 7, die das Blech zusammenhalten und das Blech stabilisieren. Ferner zeigt die Figur eine Rotationsrichtung R, einen Mittelpunkt M, eine Achse q und eine Achse d sowie eine Materialaussparung 12.

Die beschriebenen Bezugszeichen sind auch für die folgenden Figuren gültig, sofern sie in den Ausführungsbeispielen vorhanden sind, und werden aus Übersichtsgründen nicht erneut erläutert.

FIG 2 zeigt eine Materiallage 1 für eine Maschine, insbesondere Reluktanzmaschine. Die Materiallage umfasst magnetflussleitende Bereiche 9 und magnetflusssperrende Bereiche 11. Die magnetflussleitenden Bereiche 9 weisen magnetisches, insbesondere weichmagnetisches, Material auf.

Dieses magnetische Material ist vorzugsweise ein eisenhaltiges Material mit einer geringen Koerzitivfeldstärke, insbesondere < 50 A/m, mit einer hohen Sättigung, insbesondere >2 T, und einer hohen Permeabilität, insbesondere µr > 500.

Die magnetflusssperrenden Bereiche 11 weisen amagnetisches Material auf. Dieses Material ist vorzugsweise amagnetisch, insbesondere mit einer Permeabilität < 1,5.

Das amagnetische Material ist vorzugsweise Stahl, insbesondere Edelstahl.

Besonders gut eignet sich Stahl mit der Werkstoffnummer 1.4404.

Die Bereiche 9 und 11 sind in der Figur stoffschlüssig miteinander verbunden und daher robust und beständig gegenüber hohen Drehzahlen. Es sind keine Stege nötig.

Die Bereiche 9 und 11 sind vorzugsweise durch Erwärmung und/oder mittels Verdichtung, insbesondere mittels Sinterung, stoffschlüssig verbunden und bilden ein einstückiges Bauteil. Dies wird später in der Beschreibung des Verfahrens zur Herstellung genauer erläutert.

Die Figur zeigt zudem Segmentabschnitte 13, die z. B. luftgefüllt sind. Um einen Pumpeffekt, der sich bei geometrisch unrunden Rotoren einstellt, oder auch Geräusche zu vermeiden, sind die Segmentabschnitte 13 alternativ mit amagnetischem Material gefüllt und vorzugsweise ebenso stoffschlüssig mit den angrenzenden Bereichen verbunden. Auch bei hohen Drehzahlanforderungen sind die Segmentabschnitte 13 mit amagnetischem Material gefüllt.

Auch die Segmentabschnitte 13, die mit amagnetischem Material gefüllt sind, sind vorzugsweise mit den Bereichen 9 und/oder 11 durch Erwärmung und/oder mittels Verdichtung, insbesondere mittels Sinterung, stoffschlüssig verbunden und bilden ein einstückiges Bauteil.

Das amagnetische Material ist in einer möglichen Ausführungsform Keramik oder eine Keramikmischung.

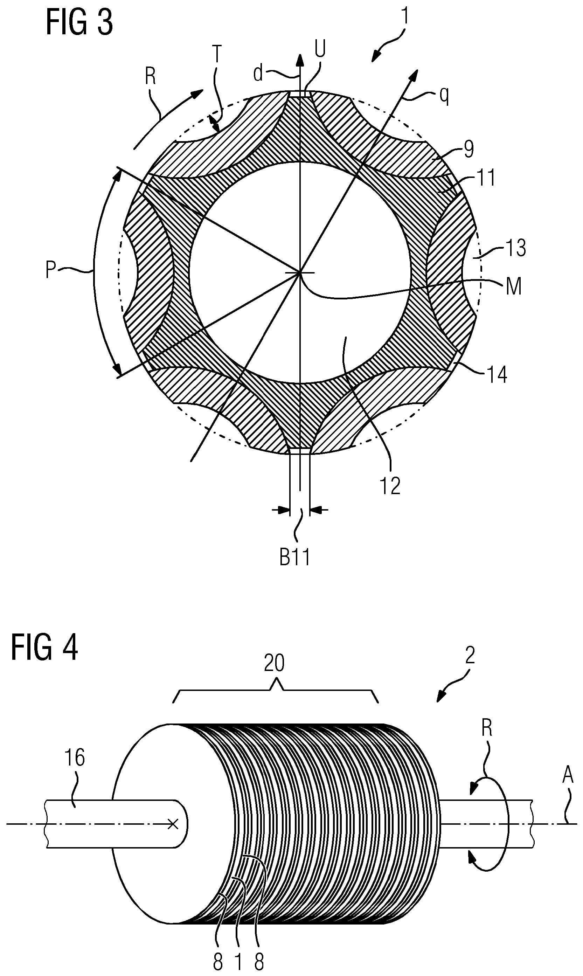

FIG 3 zeigt eine Materiallage 1 für eine inverse Reluktanzmaschine.

Die Materiallage 1 weist in Rotationsrichtung R betrachtet jeweils einen magnetflusssperrenden Bereich 11 um die Mitten der d-Achsen auf. Materiallage 1 weist jeweils einen magnetflussleitenden Bereich 9 um die Mitten der q-Achsen auf.

Ein Pol P wird durch magnetisches, insbesondere weichmagnetisches, Material gebildet und ist von amagnetischem Material, zumindest teilweise, umgeben. Ein Pol ist somit, zumindest teilweise, von amagnetischem Material, umgeben.

Die Figur zeigt zudem eine Breite B11 des flusssperrenden Bereichs 11 in Rotationsrichtung R betrachtet sowie eine Tiefe U des flusssperrenden Bereichs 11 in Rotationsrichtung R betrachtet. Durch die Tiefe U können Wirbelstromverluste gering gehalten werden.

Ferner zeigt die Figur eine radiale Tiefe T der Pole P.

Die Materiallage 1 für eine inverse Reluktanzmaschine ist bezüglich eines magnetischen Flussverlaufs durch die Ausführung der Bereiche 9 und 11 optimiert. Die Optimierung gelingt insbesondere dahingehend, dass lediglich Bereiche, die magnetischen Fluss führen sollen, mit magnetischem, insbesondere weichmagnetischem Material versehen sind.

FIG 4 zeigt einen Rotor 2, aufweisend ein Materiallagengefüge 20 mit beidseitig isolierten Materiallagen 1. Die Figur zeigt, dass das Materiallagengefüge 20 an eine Welle 16 angebunden ist. Vorteilhafterweise ist die Welle amagnetisch ausgeführt.

Der Rotor 2 rotiert in Rotationsrichtung R um eine Rotationsachse A. Die Rotationsachse A führt durch den Mittelpunkt M in den vorherigen Figuren.

Vorzugsweise weist jede Materiallage 1 auf wenigstens einer Lagenseite ein Isolationsmaterial 8 auf. Die Figur zeigt eine Ausführung, wonach jede Materiallage 1 auf beiden Lagenseiten ein Isolationsmaterial 8 aufweist.

Das Isolationsmaterial 8 ist in der Figur Lack, insbesondere Backlack.

Es ist auch möglich, dass die Materiallage 1 ein andersartiges Isolationsmaterial und zusätzlich Lack aufweist. Es ist auch möglich, dass die Materiallage 1 ein andersartiges Isolationsmaterial auf einer Lagenseite und Lack auf der anderen Lagenseite aufweist. Es ist auch möglich, dass die Materiallage 1 eine Mischform aus andersartigem Isolationsmaterial und Lack aufweist.

Die Materiallage 1 ist in der Figur mit wenigstens einer weiteren Materiallage verfestigt. Die Figur zeigt eine Mehrzahl an miteinander verfestigten Materiallagen. Auf diese Weise ist das Materiallagengefüge 20 entstanden.

Die Verfestigung gelingt besonders gut durch aufgebrachten Backlack, da dieser einfach aufgebracht werden kann. Ein vornehmlich anschließendes Verbacken der Materiallagen 1 schafft eine stabile und robuste Verbindung.

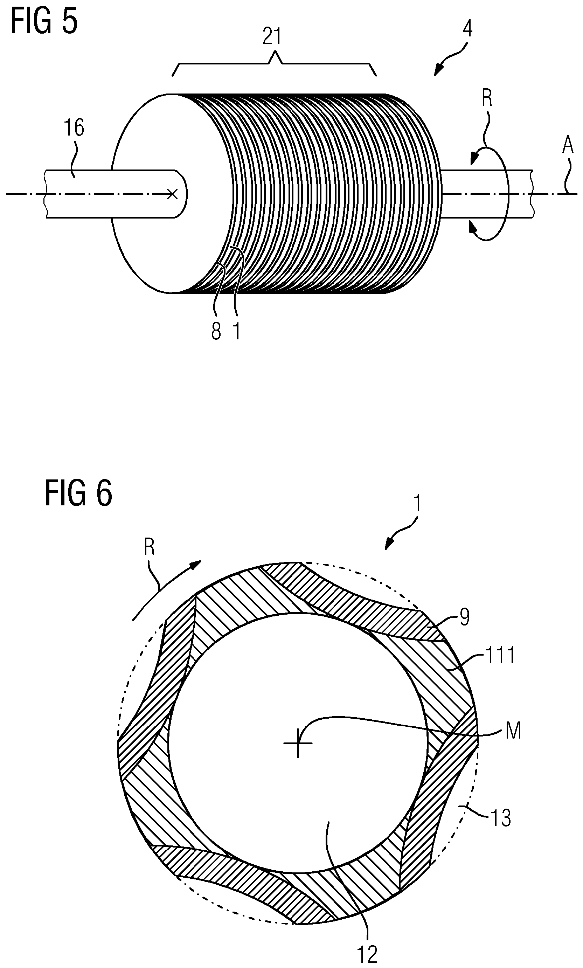

FIG 5 zeigt einen Rotor **4,** aufweisend ein Materiallagengefüge 21 mit einseitig isolierten Materiallagen. Die Figur zeigt eine Ausführung, wonach jede Materiallage 1 auf nur einer Lagenseite ein Isolationsmaterial 8 aufweist.

FIG 6 zeigt eine weitere Materiallage **1,** aufweisend permanentmagnetisches Material für eine inverse Reluktanzmaschine.

Die Materiallage weist in der Figur einen mit permanentmagnetischem Material versehenen Bereich 111 auf. Der Bereich 111 kann völlig aus permanentmagnetischem Material bestehen oder eine Mischform aus amagnetischem und permanentmagnetischem Material aufweisen.

Dies bietet den Vorteil, dass zwei parallele Magnetkreise erzeugt werden können und diese elektromagnetisch voneinander getrennt werden können. Ein erster Magnetkreis nutzt die Reluktanzkraft. Ein zweiter Magnetkreis nutzt durch das permanentmagnetische Material die Lorentzkraft. Auf diese Weise können sich die Magnetkreise ergänzen und in Summe ein größeres Drehmoment bei gleichem Strom liefern.

Die Bereiche 9 und 111 sind vorzugsweise durch Erwärmung und/oder mittels Verdichtung, insbesondere mittels Sinterung, stoffschlüssig verbunden und bilden ein einstückiges Bauteil.

Auch die Segmentabschnitte 13, die mit amagnetischem Material gefüllt sind, sind vorzugsweise mit den Bereichen 9 und/oder 111 durch Erwärmung und/oder mittels Verdichtung, insbesondere mittels Sinterung, stoffschlüssig verbunden und bilden ein einstückiges Bauteil.

Die Bereiche 9, 11 und/oder 111 müssen nicht mit Schrauben verbunden werden. Es sind ferner keine Klebungen oder Bandagen nötig.

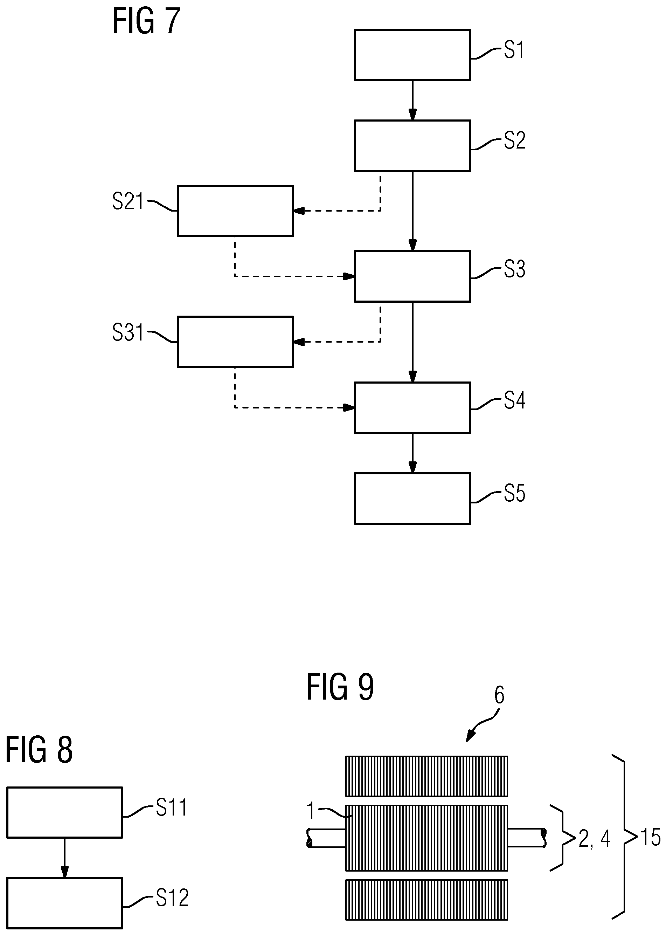

FIG 7 zeigt ein Verfahren zur Herstellung einer Materiallage.

Die Materiallage weist erfindungsgemäß wenigstens einen ersten Materialbereich, aufweisend ein erstes Material, und wenigstens einen zweiten Materialbereich, aufweisend ein zweites Material, auf.

In einem Verfahrensschritt S1 wird daher eine erste Suspension, aufweisend wenigstens ein Bindemittel und Festteilchen, durch eine erste Schablone auf eine Grundfläche zum Erhalt eines ersten Grünkörpers, aufgebracht. Der erste Materialbereich wird von der ersten Schablone abgebildet (z. B. der bereits beschriebene Bereich 11 oder 111).

Aufgebracht bedeutet hierbei vorzugsweise: Auf die Grundfläche wird die Suspension mit einer Rakel aufgebracht.

In einem Verfahrensschritt S2 folgt ein Aufbringen einer zweiten Suspension, aufweisend wenigstens ein Bindemittel und Festteilchen, durch eine zweite Schablone auf eine Grundfläche zum Erhalt eines zweiten Grünkörpers. Der zweite Materialbereich wird von der zweiten Schablone abgebildet.

Es können nun verschiedene Vorgehensweisen verfolgt werden: Das jeweilige Bindemittel aus dem ersten Grünkörper und/oder dem zweiten Grünkörper kann vor dem Zusammenfügen in einem Verfahrensschritt S3 (siehe Verfahrensschritt S21) des ersten Grünkörpers und des zweiten Grünkörpers und/oder nach dem Zusammenfügen (siehe Verfahrensschritt S31) ausgetrieben werden.

Das Austreiben des Bindemittels wird vorzugsweise mittels Entbinderung bewerkstelligt.

In einem Verfahrensschritt S4 wird ein dauerhafter, stoffschlüssiger Zusammenhalt der beiden Grünkörper miteinander und der Festteilchen im jeweiligen Grünkörper durch Erwärmung und/oder mittels Verdichtung, insbesondere mittels Sinterung, geschaffen.

In einem Verfahrensschritt S5 wird auf die Materiallage auf wenigstens einer Lagenseite ein Isolationsmaterial aufgebracht. Das Isolationsmaterial ist vorzugsweise ein Lack, insbesondere Backlack.

Aufgebracht bedeutet hierbei vorzugsweise: Auf die Lagenseite wird Isolationsmaterial mit einer Rakel aufgebracht oder die Lagenseite wird mit einem Streichwerkzeug bestrichen oder die Lagenseite wird in ein das Isolationsmaterial beinhaltende Gefäß eingetaucht.

FIG 8 ein Verfahren zur Herstellung eines Materiallagengefüges.

In einem Verfahrensschritt S11 wird eine Mehrzahl an Materiallagen (wenigstens zwei) zusammengefügt. Die Herstellung der Materiallagen wurde in FIG 7 beschrieben.

Die vorteilhaft Backlack aufweisenden Materiallagen werden zur Bildung des Materiallagengefüges übereinander angeordnet.

In einem Verfahrensschritt S12 werden die Materiallagen zur gegenseitigen Verfestigung miteinander verbacken.

Verbacken bedeutet hierbei: Die Materiallagen werden vorzugsweise mittels Druck und Wärme miteinander verklebt. Durch Druck und Wärme wird der Backlack weich, klebt die Materiallagen aneinander und härtet aus. Dies hat gegenüber anderen Verbindungsmöglichkeiten wie Schweißen, Stanzpaketieren und Nieten den Vorteil, dass die Materiallagen keine werkstoffschädigenden Kontaktstellen aufweisen. Zudem wird ein Magnetfluss nicht gestört und es entstehen keine Materialspannungen und Materialverformungen.

FIG 9 zeigt die dynamoelektrische rotatorische Maschine, insbesondere Reluktanzmaschine, 6. Die Maschine, insbesondere Reluktanzmaschine, 6 weist einen Stator 15 auf sowie einen Rotor 2,4.

## Patentansprüche

1. Verfahren zur Herstellung einer Materiallage (1) für eine dynamoelektrische rotatorische Reluktanzmaschine, wobei die Materiallage (1) wenigstens einen ersten Materialbereich, aufweisend ein erstes Material, und wenigstens einen zweiten Materialbereich, aufweisend ein zweites Material, umfasst, wobei die Materialbereiche stoffschlüssig verbunden sind, wobei die Materiallage (1) magnetflussleitende Bereiche (9), aufweisend das erste Material mit einer ersten magnetischen Permeabilität µr > 50, und wenigstens einen flusssperrenden (11) Bereich, aufweisend das zweite Material mit einer gegenüber der ersten magnetischen Permeabilität geringeren zweiten magnetischen Permeabilität µr < 5, umfasst, wobei das erste Material und das zweite Material stoffschlüssig verbunden sind, wobei die Materiallage (1) mittels eines additiven Verfahrens hergestellt wird, mit folgenden Schritten:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Materialbereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Materialbereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung.

2. Verfahren nach Anspruch 1, wobei die Festteilchen Metallteilchen umfassen.

3. Verfahren nach einem der Ansprüche 1 bis 2, wobei die Festteilchen der ersten Suspension magnetische Teilchen umfassen, wobei die Festteilchen der zweiten Suspension amagnetische Teilchen umfassen.

4. Verfahren einem der Ansprüche 1 bis 3, wobei auf die Materiallage (1) auf wenigstens einer Lagenseite ein Isolationsmaterial (8) aufgebracht wird.

5. Materiallage (1), hergestellt nach einem der Ansprüche 1 bis 4, für eine dynamoelektrische rotatorische Reluktanzmaschine (6), wobei die Materiallage (1) magnetflussleitende Bereiche (9), aufweisend ein erstes Material mit einer ersten magnetischen Permeabilität µr > 50, und wenigstens einen flusssperrenden (11) Bereich, aufweisend ein zweites Material mit einer gegenüber der ersten magnetischen Permeabilität geringeren zweiten magnetischen Permeabilität µr < 5, umfasst, wobei das erste Material und das zweite Material stoffschlüssig verbunden sind.

6. Materiallage (1) nach Anspruch 5, für einen Rotor (2,4), mit einer Rotationsrichtung (R) um eine in einem Lagenmittelpunkt (M) der Materiallage (1) angeordnete Rotationsachse (A).

7. Materiallage (1) nach einem der vorhergehenden Ansprüche 5 bis 6, wobei die Materiallage (1) auf wenigstens einer Lagenseite ein Isolationsmaterial (8) aufweist.

8. Materiallage (1) nach einem der vorhergehenden Ansprüche 5 bis 7, wobei die Materiallage (1) auf beiden Lagenseiten ein Isolationsmaterial (8) aufweist.

9. Materiallage (1) nach einem der vorhergehenden Ansprüche 5 bis 8, wobei die Materiallage (1) Lack, insbesondere Backlack, aufweist.

10. Materiallage (1) nach einem der vorhergehenden Ansprüche 5 bis 9, wobei die Materiallage (1) mit wenigstens einer weiteren Materiallage (1) verfestigbar ist.

11. Materiallage (1) nach einem der vorhergehenden Ansprüche 5 bis 10, wobei die Materiallage (1) wenigstens einen dritten Bereich (111), aufweisend permanentmagnetisches Material, aufweist, wobei das permanentmagnetische Material stoffschlüssig mit dem ersten Material und/oder mit dem zweiten Material verbunden ist.

12. Materiallage (1) nach einem der vorhergehenden Ansprüche 5 bis 11, wobei die magnetflussleitenden Bereiche einer Ausbildung von Polen (P) mit einer Polzahl 2p dienen, wobei die magnetflussleitenden (9) Bereiche derart angeordnet sind, dass sie an einer dem Lagenmittelpunkt zugewandten Unterseite an den flusssperrenden Bereich (11) angrenzen, wobei sich eine Polteilung in Rotationsrichtung (R) von der Mitte des flusssperrenden Bereichs (11) zur Mitte des nächsten flusssperrenden Bereichs (11) erstreckt.

13. Materiallage (1) nach Anspruch 12, wobei eine Breite (B11) der flusssperrenden Bereiche (11) in Rotationsrichtung (R) betrachtet an einem Außenumfang der Materiallage (1) zwischen 1% und 50% der Polteilung entspricht, wobei eine radiale Tiefe (T) eines Pols > 10% einer Kreisbogenlänge der Polteilung entspricht.

14. Materiallage (1) nach einem der Ansprüche 12 oder 13, wobei die magnetflussleitenden Bereiche (9) einer Ausbildung von Polen (P) mit einer Polzahl 2p dienen, wobei ein magnetflussleitender Bereich (9) von flusssperrenden Bereichen (11) im Wesentlichen bogenförmig durchzogen ist, wobei sich eine Polteilung in Rotationsrichtung (R) von der Mitte des magnetflussleitenden (9) Bereichs zur Mitte des nächsten magnetflussleitenden (9) Bereichs erstreckt.

15. Materiallage (1) nach einem der Ansprüche 12 bis 14, wobei eine Breite der magnetflussleitenden Bereiche in Rotationsrichtung (R) betrachtet an einem Außenumfang der Materiallage (1) zwischen 1% und 50% der Polteilung entspricht.

## Claims

1. Method for producing a material layer (1) for a dynamoelectric rotary reluctance machine, wherein the material layer (1) comprises at least one first material region, having a first material, and at least one second material region, having a second material, wherein the material regions are connected with a material bond, wherein the material layer (1) comprises magnetic flux-conductive regions (9), having the first material with a first magnetic permeability µr > 50, and at least one flux-blocking (11) region, having the second material with a second magnetic permeability µr < 5 which is lower compared with the first magnetic permeability, wherein the first material and the second material are connected with a material bond, wherein the material layer (1) is produced by means of an additive method,
with the following steps:
- applying a first suspension, having at least one binding agent and solid particles, through a first template onto a base area in order to achieve a first green body, wherein the first material region is reproduced by the first template,
- applying a second suspension, having at least one binding agent and solid particles, through a second template onto a base area in order to achieve a second green body, wherein the second material region is reproduced by the second template,
- joining the first green body and the second green body,
- creating a permanent, material-bonded cohesion between the two green bodies and the solid particles by heating and/or by means of compaction, in particular by means of sintering.

2. Method according to claim 1, wherein the solid particles comprise metal particles.

3. Method according to one of claims 1 to 2, wherein the solid particles of the first suspension comprise magnetic particles, wherein the solid particles of the second suspension comprise amagnetic particles.

4. Method according to one of claims 1 to 3, wherein an insulation material (8) is applied to the material layer (1) on at least one layer side.

5. Material layer (1), produced according to one of claims 1 to 4, for a dynamoelectric rotary reluctance machine (6), wherein the material layer (1) comprises magnetic flux-conductive regions (9), having a first material with a first magnetic permeability µr > 50, and at least one flux-blocking (11) region, having a second material with a second magnetic permeability µr < 5 which is lower compared with the first magnetic permeability, wherein the first material and the second material are connected with a material bond.

6. Material layer (1) according to claim 5, for a rotor (2, 4), having a rotational direction (R) about an axis of rotation (A) arranged in a layer centre point (M) of the material layer (1).

7. Material layer (1) according to one of the preceding claims 5 to 6, wherein the material layer (1) has an insulation material (8) on at least one layer side.

8. Material layer (1) according to one of the preceding claims 5 to 7, wherein the material layer (1) has an insulation material (8) on both layer sides.

9. Material layer (1) according to one of the preceding claims 5 to 8, wherein the material layer (1) has varnish, in particular thermosetting varnish.

10. Material layer (1) according to one of the preceding claims 5 to 9, wherein the material layer (1) can be strengthened with at least one further material layer (1).

11. Material layer (1) according to one of the preceding claims 5 to 10, wherein the material layer (1) has at least one third region (111), having permanent magnetic material, wherein the permanent magnetic material is connected with a material bond to the first material and/or to the second material.

12. Material layer (1) according to one of the preceding claims 5 to 11, wherein the magnetic flux-conductive regions are used to form poles (P) with a number of poles 2p, wherein the magnetic flux-conductive (9) regions are arranged so that they adjoin a lower side facing the layer centre point at the flux-blocking region (11), wherein a pole pitch extends in the rotational direction (R) from the centre of the flux-blocking region (11) to the centre of the next flux-blocking region (11).

13. Material layer (1) according to claim 12, wherein a width (B11) of the flux-blocking regions (11), viewed in the rotational direction (R), at an external periphery of the material layer (1), corresponds to between 1% and 50% of the pole pitch, wherein a radial depth (T) of a pole > 10% corresponds to a circular arc length of the pole pitch.

14. Material layer (1) according to one of claims 12 or 13, wherein the magnetic flux-conductive regions (9) are used to form poles (P) with a number of poles 2p, wherein a magnetic flux-conductive region (9) of flux-blocking regions (11) is drawn through substantially in the manner of an arc, wherein a pole pitch extends in the rotational direction (R) from the centre of the magnetic flux-conductive (9) region to the centre of the next magnetic flux-conductive (9) region.

15. Material layer (1) according to one of claims 12 to 14, wherein a width of the magnetic flux-conductive regions, viewed in the rotational direction (R), at an external periphery of the material layer (1), corresponds to between 1% and 50% of the pole pitch.

## Revendications

1. Procédé de fabrication d'une couche (1) de matériau pour une machine à réluctance dynamoélectrique tournante, dans lequel la couche (1) de matériau comprend au moins une première zone de matériau, comportant un premier matériau, et au moins une deuxième zone de matériau comportant un deuxième matériau, dans lequel les zones de matériau sont reliées à coopération de matière, dans lequel la couche (1) de matériau comprend des zones (9) conduisant le flux magnétique, comportant le premier matériau, ayant une première perméabilité magnétique µr > 50 et au moins une zone (11) barrant le flux, comportant le deuxième matériau, ayant une deuxième perméabilité magnétique µr < 5 plus petite que la première perméabilité magnétique, dans lequel le premier matériau et le deuxième matériau sont reliés à coopération de matière, dans lequel la couche (1) de matériau est fabriquée au moyen du procédé additif comprenant les stades suivants :
- dépôt d'une première suspension, comportant au moins un liant et des particules solides, par un premier gabarit sur une surface de base, pour obtenir un premier corps à vert, dans lequel la première zone de matériau est représentée par le premier gabarit,
- dépôt d'une deuxième suspension, comportant au moins un liant et des particules solides, par un deuxième gabarit sur une surface de base pour obtenir un deuxième corps à vert, dans lequel la deuxième zone de matériau est représentée par le deuxième gabarit,
- assemblage du premier corps à vert et du deuxième corps à vert,
- obtention d'une cohésion permanente à coopération de matière des deux corps à vert et des particules solides par chauffage et/ou au moyen d'une compression, en particulier au moyen d'un frittage.

2. Procédé suivant la revendication 1, dans lequel les particules solides comprennent des particules métalliques.

3. Procédé suivant l'une des revendications 1 à 2, dans lequel les particules solides de la première suspension comprennent des particules magnétiques, dans lequel les particules solides de la deuxième suspension comprennent des particules amagnétiques.

4. Procédé suivant l'une des revendications 1 à 3, dans lequel on dépose sur la couche (1) de matériau sur au moins une face de la couche un matériau (8) d'isolation.

5. Couche (1) de matériau fabriquée suivant l'une des revendications 1 à 4, pour une machine (6) à réluctance dynamoélectrique tournante, dans laquelle la couche (1) de matériau comprend des zones (9) conduisant le flux magnétique, comportant un premier matériau ayant une première perméabilité magnétique µr > 50 et au moins une zone (11) barrant le flux, comportant un deuxième matériau ayant une deuxième perméabilité magnétique µr < 5 plus petite que la perméabilité magnétique, dans laquelle le premier matériau et le deuxième matériau sont reliés à coopération de matière.

6. Couche (1) de matériau suivant la revendication 5, pour un rotor (2, 4), ayant un sens (R) de rotation autour d'un axe (A) de rotation disposé en un point (M) médian de la couche (1) de matériau.

7. Couche (1) de matériau suivant l'une des revendications 5 à 6 précédentes, dans laquelle la couche (1) de matériau a un matériau (8) d'isolation sur au moins une face de la couche.

8. Couche (1) de matériau suivant l'une des revendications 5 à 7 précédentes, dans laquelle la couche (1) de matériau a un matériau (8) isolant sur les deux faces de la couche.

9. Couche (1) de matériau suivant l'une des revendications 5 à 8 précédentes, dans laquelle la couche (1) de matériau a du vernis, en particulier de renfort.

10. Couche (1) de matériau suivant l'une des revendications 5 à 9 précédentes, dans laquelle la couche (1) de matériau peut être consolidée au moyen d'une autre couche (1) de matériau.

11. Couche (1) de matériau suivant l'une des revendications 5 à 10 précédentes, dans laquelle la couche (1) de matériau a au moins une troisième zone (111) ayant du matériau à magnétisme permanent, dans laquelle le matériau à magnétisme permanent est relié à coopération de matière avec le premier matériau et/ou avec le deuxième matériau.

12. Couche (1) de matériau suivant l'une des revendications 5 à 11 précédentes, dans laquelle les zones conduisant le flux magnétique servent à constituer des pôles (P) avec un nombre 2p de pôles, dans laquelle les zones (9) conduisant le flux magnétique sont disposées de manière à être voisines de la zone (11) barrant le flux sur une face inférieure tournée vers le point médian de la couche, dans laquelle un pas polaire s'étend dans le sens (R) de rotation du milieu de la zone (11) barrant le flux au milieu de la zone (11) suivante barrant le flux.

13. Couche (1) de matériau suivant la revendication 12, dans laquelle une largeur (B11) des zones (11) barrant le flux, considérée dans le sens (R) de rotation sur un pourtour extérieur de la couche (1) de matériau, représente entre 1 % et 50 % du pas polaire, dans laquelle une profondeur (T) radiale d'un pôle représente > 10 % d'une longueur d'arc circulaire du pas polaire.

14. Couche (1) de matériau suivant l'une des revendications 12 ou 13, dans laquelle les zones (9) conduisant le flux magnétique servent à la constitution de pôles (P) avec un nombre 2p de pôles, dans laquelle une zone (9) conduisant le flux magnétique est traversée sensiblement en forme d'arc par des zones (11) barrant le flux, dans laquelle un pas polaire s'étend dans le sens (R) de rotation du milieu de la zone (9) conduisant le flux magnétique au milieu de la zone (9) suivante conduisant le flux magnétique.

15. Couche (1) de matériau suivant l'une des revendications 12 à 14, dans laquelle une largeur des zones conduisant le flux magnétique, considérée dans le sens (R) de rotation sur une partie extérieure de la couche (1) de matériau, représente entre 1 % et 50 % du pas polaire.
